Europäisches Patentamt

European Patent Office

Office européen des brevets

(11) Veröffentlichungsnummer: **0 321 936**
**A2**

## (12) EUROPÄISCHE PATENTANMELDUNG

(21) Anmeldenummer: 88121344.1

(22) Anmeldetag: 21.12.88

(51) Int. Cl.4: **B29C 47/92 , //B29L23:00**

(30) Priorität: 23.12.87 DE 3743721

(43) Veröffentlichungstag der Anmeldung:
28.06.89 Patentblatt 89/26

(84) Benannte Vertragsstaaten:
DE FR GB IT

(71) Anmelder: Veit-Holger, Karl Dr.-Ing.,
Nürnberger Strasse 119
D-8700 Würzburg(DE)

(72) Erfinder: Veit-Holger, Karl Dr.-Ing.,
Nürnberger Strasse 119
D-8700 Würzburg(DE)

(74) Vertreter: Pöhner, Wilfried Anton, Dr.
Kaiserstrasse 27 Postfach 63 23
D-8700 Würzburg 1(DE)

(54) **Folienblasanlage mit Rolle.**

(57) Für eine Folienblasanlage mit einer Rolle 6 zur Aufnahme der zunächst schlauchförmigen und dann zusammengelegten Folie 3 wird vorgeschlagen, daß der Durchmesser der Rolle 6 in Richtung der Achse gemessen und dementsprechend die Dicke, in aller Regel unterschiedlich über den Umfang des Schlauches mit Hilfe eines Stellgliedes gesteuert wird.

EP 0 321 936 A2

## Folienblasanlage mit Rolle

Die Erfindung bezieht sich auf eine Folienblasanlage mit einer Rolle zur Aufnahme der zunächst schlauchförmigen und dann zusammengelegten Folie.

Derartige Folienblasanlagen sind bekannt und sie dienen der Herstellung eines zunächst mit Hilfe eines Blaskopfes erzeugten, anschließend zur Verringerung der Wandstärke noch in warmem Zustand verstreckten Kunststoffschlauches, welcher mit Erreichen des ausgekühlten Endzustandes flachgelegt und auf einer Rolle aufgewickelt wird. Eine andere Möglichkeit besteht im Auftrennen des Schlauches und im anschließenden, das Zusammenlegen bewirkenden Aufrollen. Aus unterschiedlichsten Gründen ergeben sich bei diesen schlauchförmigen Folien unterschiedliche Dicken über ihren Umfang. Die Abweichungen vom Mittelwert betragen auch bei genauester Justierung ohne weiteres 10 %. Bei unmittelbarem Aufwickeln der Folie auf die Rolle bilden sich unterschiedliche Wickelradien, so daß der erhaltene Durchmesser eine Funktion der Rollenachse ist. Derartige Rollen mit unterschiedlichen Radien sind für die Weiterverarbeitung unbrauchbar.

Zur Abhilfe sind im Stand der Technik unterschiedliche Maßnahmen bekannt, deren gemeinsamer Nachteil der hohe bauliche und konstruktive Aufwand und damit kostenintensive Herstellung ist. So ist es bekannt, durch Drehen der Extrusionslage zu erreichen, daß sich die unterschiedlichen Dicken des Folienschlauches sukzessive über die gesamte Breite verteilen, so daß sich integral gesehen auf die Länge der Rolle der gleiche Durchmesser ergibt. Etwa die gleiche Wirkung läßt sich erreichen, wenn das Werkzeug selbst oder die anschließende Flachlegevorrichtung, in welcher der Schlauch in eine Ebene überführt wird, mit etwa gleichförmiger Rotationsgeschwindigkeit gedreht wird. Bei all diesen Verfahren ist von Nachteil, daß die unterschiedliche Wandstärke der Folie nicht beseitigt sondern aufgrund der Rotation sukzessive über die gesamte Länge der Rolle verteilt wird.

Hiervon ausgehend hat sich die Erfindung die Weiterbildung derartiger Folienblasanlagen dahingehend zur Aufgabe gemacht, daß der Durchmesser der Rolle ebenso wie die Wandstärke der Folie vergleichmäßigt wird.

Gelöst wird diese Aufgabe erfindungsgemäß dadurch, daß der Durchmesser der Rolle in Richtung der Achse gemessen und dementsprechend die Dicke in aller Regel unterschiedlich über den Umfang des schlauches mit Hilfe des Stellgliedes gesteuert wird.

Der Kerngedanke vorliegender Erfindung besteht einmal darin, durch die Messung des (Außen)-Durchmessers der Rolle in Richtung der Achse die Dicke der Folie und insbesondere die Abweichung über die Breite zu erfassen. Der Wert für den Durchmesser ergibt ein Maß für die Dicke der Folie bzw. deren Abweichung; der Meßpunkt im Bezug auf die Achse der Rolle der Ort der Abweichungen hinsichtlich der Breite der Folie. Damit kann der Meßwert zur Erzeugung eines Steuersignales verwendet werden, welches einem Stellglied zugeführt wird, das seinerseits im Herstellungsstadium auf die Dicke des Schlauches Einfluß nimmt. Da in aller Regel in Längsrichtung der Rolle unterschiedliche Durchmesser ermittelt werden, ist die Einflußnahme auf die einzelnen Punkte des Schlauchumfanges unterschiedlich. In erster Näherung ergibt sich ein proportionaler Zusammenhang des Rollendurchmessers in Abhängigkeit von der Rollenachse mit der Dicke über den Umfang des Schlauches. Auf diese Weise ist eine gezielte Einflußnahme auf die Foliendicke möglich und es bedarf keiner der aus dem Stand der Technik üblichen Verteilung über die Längsachse der Rolle.

Die hierdurch erreichbaren Vorteile sind in zweifacher Hinsicht entscheidend: Zum einen sind die Herstellungskosten einer derartigen Folienblasanlage aufgrund des Wegfalles der drehbaren Anordnung gewisser Aggregate wesentlich niedriger. Zum anderen wird erstmalig eine gleiche Wandstärke über die gesamte Breite der Folie erreichbar.

Auf welcher Art und Weise die konkrete Einfluß nahme auf die Dicke der Folie während der Her stellung erfolgt, steht hierbei im Rahmen der Erfindung grundsätzlich frei. Mehere Möglichkeiten sind hier denkbar: So kann das Stellglied dazu benutzt werden, bereits die Austrittsmenge des Kunststoffes über den Umfang individuell einzustellen.

In einer konkreten Ausgestaltung erfolgt dies durch die Einstellung des Düsenspaltes und/oder durch die Temperatur im Werkzeug. Der Düsenspalt gestattet eine unmittelbare Einflußnahme auf die Austrittsmenge. Die Temperatur beeinflußt die Fließfähigkeit und Orientierbarkeit der Schmelze in dem Sinne, daß eine höhere Temperatur sowohl die Fließfähigkeit als auch die Orientierbarkeit während der Strömungsphase erhöht, so daß eine Einflußnahme auf die Wandstärke möglich ist. Im umgekehrten Sinn bedingt die Erniedrigung der Temperatur eine Erhöhung der Wandstärke.

Eine andere Möglichkeit der Einflußnahme auf die Dicke der Folie besteht in der Beeinflussung der hinter dem Blaskopf stattfindenden Verstreckung und Ausdehnung. Hierbei wird der bereits fertige Folienschlauch erst hinter dem Blaskopf über seinen Umfang auf unterschiedliche Temperaturen eingestellt, in dem der dort befindliche Kühlring über seinen Umfang gesehen unterschiedliche Kühlleistungen erbringt. Hierzu wird der Kühlring über seinen Umfang entsprechend der Meßwerte unterschiedlich eingestellt, beispielsweise dadurch, daß er in Sektoren unterteilt und die Fördermenge des einzelnen Sektors unterschiedlich eingestellt wird. Eine andere denk bare Möglichkeit bestände darin, den im wesentlichen aus zwei im Abstand zueinander angeordneten Schreiben bestehenden Kühlring in seiner Kühlleistung über den Umfang dadurch zu beeinflussen, daß wenigstens eine der Scheiben elastisch und über eine größere Anzahl über den Umfang angeordneter Stellmotoren in seiner jeweiligen Leistungsfähigkeit beeinflußt und entsprechend der Meßwerte eingestellt wird. Entscheidend ist, durch unterschiedliche Kühlung in einem ringförmigen Bereich über den Umfang des Schlauches die Temperatur und damit die Verstreckung zu beeinflussen. Auch hier bedeutet höhere Temperatur höhere Verstreckbarkeit und folglich geringere Folienstärke. Aus über den Umfang des Kühlringes unterschiedlichen Durchsatzmengen ergeben sich verschiedene Temperaturen und unterschiedliche Verstreckbarkeit, die bei entsprechender Steuerung eine gleichmäßige Dicke der Folie über den Gesamtumfang ergeben.

In einer besonders bevorzugten Ausführungsform ist vorgeschlagen, während der Messung des Durchmessers eine Anpressung gegen die Rolle vorzunehmen. Auf diese Weise lassen sich lockere und feste Wicklungen erkennen und bei der Auswertung und Steuerung des Stellgliedes berücksichtigen. Die Anpressung kann beispielsweise dadurch erzeugt werden, daß der Meßfühler selbst gegen die Rolle gepreßt und mit Erreichen eines gewissen Druckwertes der Duchmesser erfaßt wird. Andererseits könnte die Rolle in einer Richtung zusammengepreßt und durch eine gesondert davon eingesetzte Meßvorrichtung in diesem Bereich auf optischen Wege der Durchmesser ermittelt werden. Unabhängig von einer lokkeren oder festen Wicklung erhält man einen Durchmesser der Rolle, der im wesentlichen nur noch durch die Foliendicke bestimmt wird.

Eine andere, dem gleichen Ziel dienende Möglichkeit besteht darin, neben der Erfassung des Durchmessers der Rolle eine radiale Dichtemessung vorzunehmen, deren Resultat ebenfalls ein Maß für die lockere oder feste Wickelung ist. Die Dichtemessung kann ohne Beschränkung der Allgemeinheit durch Ultraschall erfolgen.

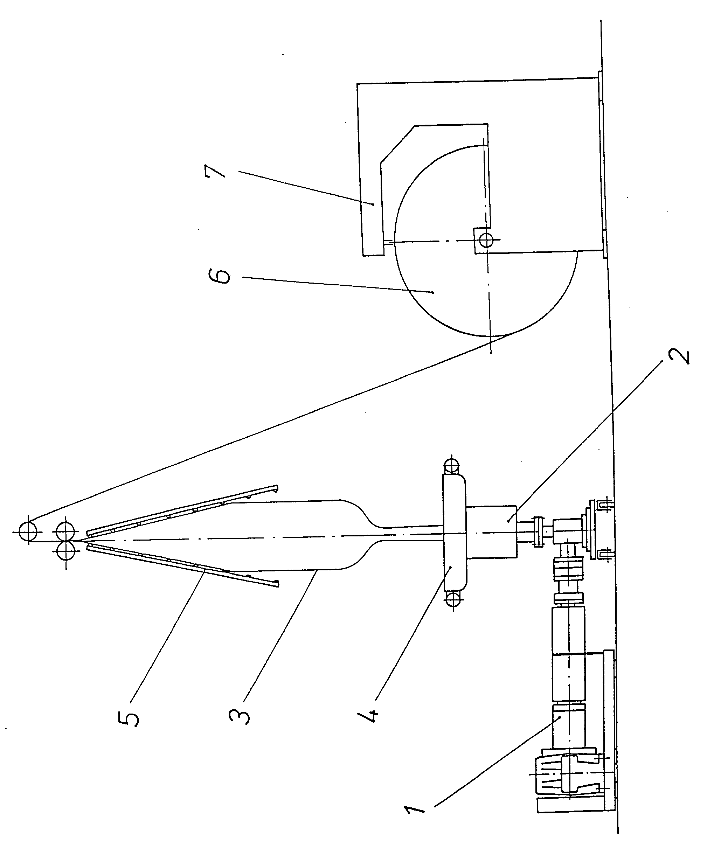

Weitere Einzelheiten, Merkmale und Vorteile der Erfindung lassen sich nachfolgendem Beschreibungsteil entnehmen, indem anhand der Zeichnung ein Ausführungsbeispiel der Erfindung näher erläutert wird. Sie zeigt in schematischer Darstellung eine erfindungsgemäße Folienblasanlage.

In allgemein bekannter Weise besteht die Anlage aus einem der Zufuhr des Kunststoffmaterials dienenden Extruder 1 und einem sich unmittelbar daran anschließenden Blaskopf 2. Dieser dient der Herstellung und als Ausgangspunkt für ein in vertikaler Richtung nach oben zu sich ausweitende schlauchförmige Folie 3. Auf dem Blaskopf 2 findet sich ein Kühlring 4.

Die Folie 3 bewegt sich ausgehend von Blaskopf 2 durch den Kühlring 4, verbreitet sich anschließend zu größeren Durchmessern hin, kühlt dabei aus und wird in verfestigtem Zustand über ein Faltsystem zusammengelegt. Von dort gelangt die Folie 3 in nunmehr ebenem Zustand zu der der Aufwicklung dienenden Rolle 6.

Der Durchmesser der Rolle 6 wird über eine Meßvorrichtung 7 erfaßt, wobei, was hier nicht aus der Zeichnung entnehmbar ist, diese Meßvorrichtung 7 senkrecht zur Zeichenebene bewegbar ist, so daß der Rollendurchmesser als Funktion der Achse der Rolle 6 aufgezeichnet und erfaßt werden kann. Von Vorteil ist, wenn während der Messung des Durchmessers im Bereich der Meßstrecke eine Anpressung der auf der Rolle 6 aufgewickelten Folie zur Mittelachse hin erfolgt, damit lockere und/oder feste Wicklungen ausgeglichen und berücksichtigt werden können, so daß als Meßergebnis ein einzig durch die Dicke der Folie 3 bestimmter Wert für den Durchmesser erhaltbar wird.

Im Ergebnis erhält man eine in der Herstellung preisgünstige Folienblasanglage, mit deren Hilfe über die Breite gleichmäßig dicke Kunststoffolien herstellbar sind.

## Ansprüche

1. Folienblasanlage mit einer Rolle zur Aufnahme der zunächst schlauchförmigen und dann zusammengelegten Folie, **dadurch gekennzeichnet,** daß der Durchmesser der Rolle 6 in Richtung der Achse gemessen und dementsprechend die Dicke in aller Regel unterschiedlich über den Umfang des Schlauches mit Hilfe des Stellgliedes gesteuert wird.

2. Anlage nach Anspruch 1, **dadurch gekennzeichnet,** daß das Stellglied die Austrittsmenge des Kunststoffes über den Umfang einstellt.

3. Anlage nach Anspruch 1 oder 2, **dadurch gekennzeichnet,** daß das Stellglied den Düsenspalt im Werkzeug und/oder die Temperatur im Werkzeug ändert.

4. Anlage nach einem der Ansprüche 1 bis 3, **dadurch gekennzeichnet,** daß der Luftdurchlaß des Kühlringes 4 über seinen Umfang eingestellt wird.

5. Anlage nach einen der Ansprüche 1 bis 4, **dadurch gekennzeichnet,** daß während der Messung eine Anpressung gegen die Rolle 6 vorgenommen wird.

6. Anlage nach einem der Ansprüche 1 bis·5, **dadurch gekennzeichnet,** daß bei Messung des Durchmessers eine radiale Dichtemessung erfolgt.